(19) Europäisches Patentamt

European Patent Office

Office européen des brevets

(11) EP 0 855 419 A1

(12) # DEMANDE DE BREVET EUROPEEN

(43) Date de publication:
**29.07.1998 Bulletin 1998/31**

(51) Int Cl.⁶: **C08J 3/075**, C08J 5/00,
C08J 7/04

(21) Numéro de dépôt: **98400154.5**

(22) Date de dépôt: **26.01.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **24.01.1997 FR 9700783**

(71) Demandeur: **ELF ATOCHEM S.A.**
**92800 Puteaux, Hauts-de-Seine (FR)**

(72) Inventeurs:
• **Bonnet, Evelyne**
**60260 La Morlaye (FR)**

• **Flat, Jean-Jacques**
**27470 Serquigny (FR)**
• **Valot, Emeryc**
**78220 Viroflay (FR)**

(74) Mandataire: **Neel, Henry et al**
**Elf Atochem S.A.,**
**Dept. Propriété Industrielle,**
**La Défense 10,**
**Cedex 42**
**92091 Paris La Défense (FR)**

(54) **Procédé d'enrobage de gel de matière plastique**

(57) L'invention concerne un procédé d'enrobage de gel de matière plastique qui consiste à couler une composition gélifiable dans un moule dont les faces intérieures sont recouvertes par une couche de poudre de polymère organique.

## Description

La présente invention concerne un procédé d'enrobage d'un gel de matière plastique.

Il est connu que les gels polymérisés de matière plastique ont généralement une consistance molle et sont plus ou moins collant superficiellement. Ce collant superficiel est généralement désigné par "tack".

Pour la majorité de leurs utilisations, telles que notamment pour des applications médicales, il est indispensable de les envelopper.

On peut utiliser pour envelopper lesdits gels de matière plastique un film de polyéthylène, de polychlorure de vinyle plastifié ou bien encore de polyuréthane élastomère.

Ainsi, dans le brevet EP 57838, un gel polyuréthane est coulé dans une enveloppe carrée confectionnée au préalable en feuille de polyuréthane puis fermée par soudure.

On peut également envelopper les gels en appliquant une matière élastique à l'état liquide ou dissous à la surface du gel sur laquelle elle se solidifie ou se transforme en pellicule sous l'action d'une réaction chimique.

Cependant, toutes ces façons d'opérer présentent des inconvénients.

Les enveloppes plastiques ainsi obtenues sont plus ou moins perméables aux produits susceptibles d'exsuder des gels enveloppés.

De plus, ces enveloppes sont généralement trop rigides et modifient défavorablement les propriétés hydrauliques des gels.

En effet, elles ne permettent pas une déformation suffisante sous le poids d'un corps ni une répartition homogéne des pression et contraintes (cas, par exemple, des coussins antiescarres en gel de polyuréthane ou de silicone recouverts par des enveloppes en polyuréthane) Ainsi, le corps n'épouse pas correctement la surface de contact et entraîne par conséquent une augmentation de la pression de portance, définie comme étant le rapport du poids d'un corps sur la surface portante.

On a maintenant trouvé un procédé pour enrober les gels de matière plastique, caractérisé en ce qu'il consiste :

a) à déposer sur la totalité des faces intérieures d'un moule une couche continue d'une poudre de polymère organique ;
b) à couler une composition gélifiable éventuellement plastifiée dans ledit moule ;
c) à maintenir cohérent la couche de poudre de polymère organique sur les faces intérieures du moule pendant toute l'opération de coulée b) ;
d) à gélifier ladite composition coulée ;
e) à démouler, et
f) à éliminer éventuellement, l'excès de poudre.

Selon la présente invention, pendant toute la durée du coulage de la composition gélifiable, la couche de poudre de polymère organique doit être maintenue sur les faces intérieures du moule de telle sorte qu'il y ait une liaison permanente des grains de la matière poudreuse entre eux. Cette couche de poudre de polymère organique, qui doit avoir une épaisseur suffisante pour envelopper totalement la composition gélifiable peut éventuellement pénétrer dans ladite composition gélifiable.

La gélification de ladite composition gélifiable selon la présente invention peut résulter d'une réaction chimique éventuellement accélérée par chauffage.

Selon la présente invention, on désigne par poudre de polymère organique une poudre de polymère thermoplastique choisie parmi les poudres de polyamide, de polychlorure de vinyle (PVC), de polyméthylméthacrylate (PMMA), de polycarbonate.

De préférence, on utilisera des poudres de polyamide.

Par polyamide, nous entendons un polymère résultant de la polycondensation d'un ou plusieurs aminoacides tels que les acides aminocaproïques, amino-7 heptanoïque, amino-11 undécanoïque, d'un ou plusieurs lactames, tels que le caprolactame, le lauryllactame, d'un ou plusieurs sels ou mélanges de diamines telles l'hexaméthylène diamine, la dodécaméthylénediamine avec des diacides tels que les acides téréphtaliques, adipique, azélaïque, ... ou des mélanges de tous ces monomères, ce qui conduit à un copolyamide.

De préférence, on utilisera des polyamides obtenus par polymérisation de lauryllactame (PA 12) de caprolactame (PA 6) ou de leur mélange (PA6/12).

Les poudres de polymère organique utilisables selon la présente invention présentent avantageusement des diamètres de particule compris entre 2 µm et 200 µm et, de préférence, compris entre 5 µm et 60 µm.

Ces poudres sont de préférence poreuses et présentent une prise d'huile au moins égale à 50 g/100 g de poudre et, de préférence, une prise d'huile comprise entre 70 g/100 g de poudre et 200 g/100 g de poudre déterminée selon la norme ISO 787/5-1980.

A titre de composition gélifiable utilisable selon la présente invention, on citera les compositions gélifiables dites à deux composants telles que les compositions gélifiables de silicone, ou de polyuréthane éventuellement plastifiées.

L'invention concerne tout particulièrement les compositions gélifiables plastifiées de polyuréthane à deux composants.

Ces compositions gélifiables plastifiées de polyuréthane à deux composants sont généralement constituées d'une partie A comprenant au moins un polyol, au moins un plastifiant et éventuellement un accélérateur de polycondensation désigné ci-après par catalyseur, et d'une partie B constitué par au moins un di- ou polyisocyanate.

Selon la présente invention, les polyols utilisables ont une masse moléculaire moyenne en nombre $\overline{Mn}$ allant de 500 à 15 000 et, de préférence comprise entre 1 000 et 3 000.

Les polyols utilisables selon la présente invention peuvent être choisis parmi les polyesters-polyols, les polyéthers-polyols, les polythioéthers-polyols, les polyacétals-polyols, les polycarbonates-polyols, les polyestéramides-polyols, les polyamides-polyols, les polydiènes-polyols et le mélange d'au moins deux des polyols précités.

A titre de polyesters portant des groupes hydroxy, on citera les produits de réaction d'alcools polyvalents, de préférence divalents, accompagnés éventuellement d'alcools trivalents, et d'acides carboxyliques polyvalents, et de préférence divalents. A la place des acides polycarboxyliques libres, on peut également utiliser lors de la préparation des polyesters les anhydrides d'acides polycarboxyliques correspondants ou esters d'acides polycarboxyliques et d'alcools inférieurs correspondants ou leurs mélanges. Les acides polycarboxyliques peuvent être de nature aliphatique, cycloaliphatique, aromatique et/ou hétérocyclique et éventuellement substitués, par exemple par des atomes d'halogène, et/ou saturés.

A titre d'illustration de tels acides carboxyliques et dérivés, on citera : les acides succinique, adipique, subérique, azélaïque, sébacique, phtalique, trimélitique, les anhydrides phtalique, tétrahydrophtalique, hexahydrophtalique, tétrachlorophtalique, endométhylène-tétrahydrophtalique, glutarique, l'acide maléïque, l'anhydride maléique, l'acide fumarique, les acides gras insaturés dimérisés et trimérisés éventuellement en mélange avec des acides gras insaturés monomères comme l'acide oléique ; le téréphtalate de diméthyle et le téréphtalate de bis-glycol.

Parmi les alcools polyvalents, on citera par exemple le 1,2-éthanédiol, le 1,2-et1,3-propanediol, le 1,4-et 2,3-butanediol, le 1,6-hexanediol, le 1,8-octanediol, le glycol néopentylique, le 1,4-bis-hydroxyméthylcyclohexane, le 2-méthyl-1,3-propanediol, le glycérol, le triméthylolpropane, le 1,2,6-hexanetriol, le 1,2,4-butane-triol, le triméthyloléthane, le pentaérythritol, le quinitol, le mannitol, le sorbitol, le formitol, le méthylglucoside, et également le diéthylène-glycol, le triéthylène-glycol, le tétraéthylène-glycol et les polyéthylène-glycols supérieurs, le dipropylène-glycol et les propylènes-glycols supérieurs et le dibutylène-glycol et les polybutylène-glycols supérieurs. Les polyesters peuvent porter des groupes carboxyle dans certaines positions terminales. On peut également utiliser des polyesters de lactones, par exemple de l'epsilon-caprolactone, ou d'acides hydroxycarboxyliques, par exemple de l'acide oméga-hydroxycaproïque.

Les polyethers-polyols utilisables selon l'invention portant au moins 2, en général 2 à 8, de préférence 2 à 3 groupes hydroxy, sont ceux du type connu en soi qu'on obtient par exemple par polymérisation d'époxydes comme l'oxyde d'éthylène, l'oxyde de propylène, l'oxyde de butylène, le tétrahydrofuranne, l'oxyde de styrène ou l'épichlorhydrine sur eux-mêmes, par exemple en présence de catalyseurs de Lewis tels que BF$_3$, ou par addition de ces époxydes de préférence de l'oxyde d'éthylène et de l'oxyde de propylène, éventuellement en mélange ou successivement, sur des composants de départ portant des atomes d'hydrogène réactif comme l'eau, les alcools, l'ammoniaque ou des amines, par exemple le 1,2-éthanediol, le 1,3 ou 1,2 propanédiol, le triméthylolpropane, le glycérol, le sorbitol, le 4,4'-dihydroxydiphénylpropane, l'aniline, l'éthanolamine ou l'éthylène-diamine. On peut également utiliser conformément à l'invention des polyéthers de saccharose ou des polyéthers condensés sur formitol ou sur formose. Dans de nombreux cas, on préfère les polyéthers contenant des proportions prépondérantes (jusqu'à 90 % en poids, par rapport à tous les groupes OH présents dans le polyéther) de groupes OH primaires.

A titre de polythioters-polyols, on citera en particulier les produits de condensation du thiodiglycol sur lui-même et/ou sur d'autres glycols, des acides dicarboxyliques, du formaldéhyde, et des acides aminocarboxyliques ou des aminoalcools. Selon la nature du second composant, les produits obtenus sont par exemple des polythioéthers mélangés, des polythioéther-esters ou des polythioéther-ester-amides.

A titre d'illustration de polyacétals-polyols, on citera par exemple ceux qu'on peut préparer à partir de glycols comme le diéthylène-glycol, le triéthylène-glycol, le 4,4'-dihydroxyéthoxydiphényldiméthylméthane, l'hexane-diol et le formaldéhyde. On peut également utiliser dans l'invention des polyacétals obtenus par polymérisation d'écétals cyliques comme par exemple le trioxane.

A titre d'illustration de polycarbonates portant des groupes hydroxy, on citera ceux de type connu en soi qu'on obtient par exemple par réaction de diols comme le propane-diol-1,3, le butane-diol-1,4 et/ou l'hexane-diol-1,6, le diéthylène-glycol, le triéthylène-glycol, le tétraéthylène-glycol ou le thiodiglycol, avec des carbonates de diaryle, par exemple le carbonate de diphényle, ou le phosgène;

A titre d'illustration de polyesteramides-polyols et polyamides-polyols, on citera par exemple les condensats principalement linéaires obtenus à partir d'acides carboxyliques polyvalents saturés ou insaturés et de leurs anhydrides et d'aminoalcools polyvalents saturés ou insaturés, diamines, polyamines et leurs mélanges.

On peut également utiliser des polyols contenant déjà des groupes uréthane ou urée, ainsi que des polyols naturels éventuellement modifiés comme l'huile de ricin.

A titre d'illustration de polydiènes-polyols utilisables selon la présente invention, on citera les oligomères de diène conjugué hydroxytélechélique qui peuvent être obtenus par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2'[méthyl-2, N-(hydroxy-2éthyl)propionamide] ou la polymérisation anionique de diène conjugué ayant de 4 à 20 atomes de carbone en présence d'un catalyseur tel que le naphtalène dilithium.

Selon la présente invention, le diène conjugué du polydiène-polyol est choisi dans le groupe comprenant le butadiène, l'isoprène, le chloroprène, le pentadiène-1,3, le cyclopentadiène.

Selon la présente invention, on utilisera de préférence un polydiène-polyol à base de butadiène.

Conviennent également les copolymères de dienes conjugués et de monomères vinylique et acrylique tels que le styrène, l'acrylonitrile.

On ne sortirait pas de l'invention si on utilisait des oligomères hydroxytélécheliques de butadiène époxydés sur la chaîne ou bien encore des oligomères hydrogénés hydroxytélécheliques de diènes conjugués.

Selon la présente invention, les polydiènes-polyols peuvent avoir des masses moléculaires moyennes en nombre comprise entre 1000 et 3000.

A titre d'illustration de polydiènes-polyols, on citera les polybutadiènes hydroxytéléchéliques commercialisés par la Société ELF ATOCHEM S.A. sous les dénominations Poly Bd®R45 HT et Poly Bd®R20 LM.

On peut utiliser des mélanges des composés précédemment mentionnés tels que par exemple des mélanges de polyéthers-polyols et de polydiènes-polyols.

Parmi les plastifiants utilisables selon la présente invention, on citera les esters d'acides carboxyliques divalents ou polyvalents.

A titre d'exemples de tels acides polycarboxyliques, on citera les acides succinique, phtaliques, trimellitique, fumarique, les acides gras dimères et trimères comme l'acide oléique, éventuellement en mélange avec des acides gras monomères, les anhydrides phtaliques, tétrahydro- et hexahydro-phtaliques, endométhylène-tétrahydrophtalique, glutarique, maléique. Parmi les alcools estérifiant les acides et les anydrides, on citera des alcools aliphatiques ramifiés ou non ayant un nombre de carbone allant de 1 à 20 tels que le méthanol, l'éthanol, le propanol, l'isopropanol, le n-butanol, le sec-butanol, le tert.-butanol, les divers isomères de l'alcool pentylique, de l'alcool hexylique, de l'alcool octylique (par exemple le 2-éthylhexanol), de l'alcool nonylique, de l'alcool décylique, de l'alcool laurylique, de l'alcool myristylique, de l'alcool cétylique, de l'alcool stérarylique ainsi que les alcools de matières grasses et de cires d'origine naturelle ou obtenus par hydrogénation d'acides carboxyliques d'origine naturelle. Les alcools cycloaliphatiques tels que le cyclohexanol et ses homologues peuvent être utilisés. On peut également utiliser des composés aromatiques hydroxylés comme le phénol, le crésol, le thymol, le carvacrol, l'alcool benzylique et l'alcool phényléthylique.

On peut utiliser aussi des plastifiants phosphorés tels que les esters des alcools aliphatiques ramifiés ou non, cycloaliphatiques ou aromatiques mentionnés ci-dessus et de l'acide orthophosphorique.

On peut utiliser également des plastifiants polymères tels que par exemple les polyesters de l'acide adipique, de l'acide sébacique ou de l'acide phtalique, ainsi que des oligomères de polybutadiène, de polyisoprène et de polyisobutène.

Parmi ces plastifiants, on utilise de préférence les phtalates d'alkyle tels que le phtalate de dioctyle et le phtalate de diisotridécyle.

Selon la présente invention, le plastifiant représente au moins 10 parties en poids pour 100 parties en poids de polyol et, de préférence 50 à 500 parties en poids.

Dans l'éventualité où l'on utilise un catalyseur, celui-ci peut être choisi dans le groupe comprenant des amines tertiaires, des imidazoles et des composés organométalliques.

A titre d'illustration d'amines tertiaires, on peut citer le diaza-1,4 bicyclo[2.2.2]octane (DABCO).

A titre d'illustration de composés organométalliques, on peut citer le dibutyldilaurate d'étain (DBTL), le dibutyldiacétate d'étain.

On utilisera des quantités de catalyseur comprises entre 0,01 et 5 parties en poids pour 100 parties en poids de polyol.

La partie A peut contenir en outre des allongeurs de chaîne qui sont généralement des composés de faible masse moléculaire portant au moins deux fonctions réactives avec les fonctions isocyanates.

Comme exemples de telles fonctions réactives, on citera les fonctions hydroxyle et les fonctions amine.

A titre d'exemple de tels allongeurs de chaîne, on citera l'éthylène glycol, le 2-éthyl-1,3-héxanediol, le N,N-bis-(hydroxy-2propyl)aniline, l'isophoronediamine, l'hexaméthylène diamine.

Selon la présente invention, le polyisocyanate utilisé dans la partie B peut être un polyisocyanate aromatique, aliphatique ou cycloaliphatique ayant au moins deux fonctions isocyanate dans sa molécule.

A titre d'illustration de polyisocyanate aromatique, on citera le 4,4'-diphényl-méthane diisocyanate (MDI), les MDI modifiés liquides, les MDI polymériques, le 2,4- et le 2,6-toluylène diisocyanate (TDI) ainsi que leur mélange, le xylylène diisocyanate (XDI), le triphénylméthane triisocyanate, le tétraméthylxylylène diisocyanate (TMXDI), le paraphénylène diisocyanate (PPDI), le naphtalene diisocyanate (NDI).

A titre d'illustration de polyisocyanate aliphatique on citera l'hexaméthylène diisocyanate (HMDI) et ses dérivés, le triméthylhéxaméthylène diisocyanate.

A titre d'illustration de polyisocyanate cycloaliphatique, on citera l'isophorone diisocyanate (IPDI) et ses dérivés, le 4,4'-dicyclohexylméthanediisocyanate et le cyclohexyl diisocyanate (CHDI).

La partie B peut également être constituée par des prépolymères d'isocyanate obtenus par réaction d'un polyisocyanate mentionné précédemment avec un polyol tel que notamment polyéther-polyol, polyester-polyol et polydiène-polyol ou avec une polyamine.

Selon la présente invention, on préfère utiliser des prépolymères d'isocyanate obtenus par réaction d'un MDI avec un polydiène-polyol.

On ne sortirait pas du cadre de l'invention si on ajoutait à la partie B un monoisocyanate tel que le phenylisocyanate ou le stéarylisocyanate.

La composition gélifiable selon la présente invention peut contenir en outre divers additifs (anti-oxydants, anti-UV) et/ou charges inertes telles que des microsphères creuses constituées de silice (billes de verre creuses) ou en matière plastique.

Selon la présente invention, la composition gélifiable plastifiée de polyuréthane peut être obtenue selon le protocole ci-après qui consiste d'abord à préparer séparément les deux parties A et B d'une façon telle que l'on obtienne un rapport molaire NCO/OH au moins égale à 0,50 et, de préférence compris entre 0,65 et 1.

Ensuite, on mélange les parties A et B.

On définit ci-après par temps de travail Tt (exprimé en minutes) le temps entre le moment où l'on mélange les 2 parties A et B et le moment où l'on coule ladite composition gélifiable dans le moule. Pendant ce temps Tt, on agite constamment et on dégaze la composition gélifiable.

Ce temps Tt doit être inférieur au temps de prise Tp (temps de gel) communément appelé "Pot life".

Ce temps Tp, exprimé en minutes, est également compté à partir du moment où l'on mélange les parties A et B, jusqu'à ce que 100 g de masse réactionnelle initialement à 20°C, ne soit plus coulable.

Selon la présente, le temps correspondant à la différence Tp-Tt doit être suffisant pour permettre à la composition gélifiable de conserver une viscosité telle que ladite composition puisse être coulée, puis ensuite qu'elle remplisse totalement le moule et qu'elle diffuse partiellement à travers la couche de poudre de polymère organique tapissant les faces intérieures de façon à mouiller chaque grain de ladite couche pour obtenir une enveloppe continue et cohérente.

Un temps de travail Tt trop long (ou bien encore une différente Tp-Tt trop faible) entraînera une gélification prématurée de la composition qui serait de nature notamment à provoquer un enrobage partiel du gel fini.

L'homme du métier ajustera notamment les proportions de catalyseur dans la partie A afin d'obtenir un temps de travail Tt suffisant - ou bien encore une différence Tp-Tt suffisante pour permettre à ladite composition gélifiable de mouiller superficiellement chaque grain de la couche de polymère organique.

Selon la présente invention, on préconise, pour un temp de prise Tp égale à environ 30 minutes un temps de travial Tt au plus égal à 25 minutes et, de préférence compris entre 10 minutes et 20 minutes.

Selon la présente invention, la couche de poudre de polymère organique peut être déposée sur les faces intérieures du moule avant de couler de la composition gélifiable par tous moyens connus permettant une bonne adhésion de la poudre sur la totalité desdites faces du moule.

Ceci peut être réalisé notamment par une technique électrostatique telle que le poudrage électrostatique qui permettre de former une couche de poudre de polymère organique, régulière, homogène et continue qu'elles que soient les formes du moule. Cette technique permet également d'effectuer la coulée de la totalité de la composition gélifiable, de viscosité adéquate, sans qu'il se produise un quelconque déplacement des grains de la couche de poudre de polymère organique puis que ceux-ci adhèrent de façon électrostatique au moule.

Le dispositif pour mettre en oeuvre le procédé, peut comprendre des moyens (connus en soi), pour mettre le moule à la terre ou à la masse, des moyens pour rendre chaque grain de la poudre de polymère organique porteur d'une charge électrique positive ou négative, des moyens pour véhiculer et déposer ladite poudre de polymère organique, dont chaque grain est électrisé, sur toutes les faces intérieures du moule qui peut être en deux ou plusieurs parties assemblables, des moyens pour couler la composition gélifiable, des moyens pour éliminer l'excès de poudre et des moyens pour démouler.

L'électrisation des grains et le dépôt desdits grains sur les faces intérieures du moule peuvent être réalisés au moyen d'un pistolet électrostatique. Pour cela, les particules de polymère sont véhiculées par de l'air jusqu'à la tête de pulvérisation qui est reliée à un générateur de tension capable de créer une différence de potentiel comprise entre 20 et 80 kV sous une très faible intensité (<100 micro ampère). A l'intérieur de la tête de pulvérisation, la poudre de polymère est ainsi chargée positivement et véhiculée par de l'air jusqu'à la surface du moule métallique qui est relié à la terre du générateur (masse).

L'épaisseur de la couche de poudre de polymère organique déposée sur les faces intérieures du moule peut varier dans une large mesure. Elle est au moins égale à 10 µm et peut atteindre 100 µm, voire plus.

On ne sortirait pas du cadre de l'invention si on effectuait plusieurs poudrages électrostatiques des faces intérieures du moule avec la même poudre ou bien avec des poudres de nature différente.

Le procédé d'enrobage du gel plastique selon la présente invention peut donc être mis en oeuvre selon un protocole qui consiste à réaliser les étapes décrites ci-après.

On met le moule à la terre ou à la masse, ce moule pouvant être un moule ouvert, ou bien encore un moule en plusieurs parties lesquelles peuvent être solidaires et articulées entre elles.

On procède ensuite au poudrage électrostatique des faces intérieures du moule de manière à déposer sur lesdites faces des grains d'une poudre de polymère organique porteurs d'une charge électrique positive ou négative. Ces grains peuvent être fortement chargé électriquement sous des potentiels élevés allant de 10 000 à 50 000 volts voire plus, d'où leur forte attirance par les faces intérieures du moule qui se trouvent avoir des charges électriques opposées à la charge électrique des grains.

On coule ensuite la composition gélifiable préalablement préparée telle que décrit précédemment dans le moule d'une façon telle qu'elle remplisse totalement le moule. Pendant toute la durée de l'opération de coulée, le moule est maintenu à la terre de sorte que la couche de poudre de polymère organique adhère électriquement aux faces intérieures dudit moule sans risque de se dissocier.

L'opération de coulée terminée, on abandonne le moule à température ambiante jusqu'à ce que la réaction de gélification s'effectue totalement.

Celle-ci peut éventuellement être accélérée par chauffage.

La gélification terminée, on démoule puis on élimine éventuellement l'excès de poudre de polymère organique par tous moyens connus tels que jet d'air.

Dans le cas où l'on utilise un moule ouvert, on effectue un poudrage électrostatique de la face supérieure (accessible) avec la poudre de polymère organique préalablement électrisée dès que l'opération de coulée de la composition gélifiable est terminée.

L'enrobage des gels plastiques selon la présente invention présente l'avantage de conserver les propriétés mécaniques desdits gels finis.

Ceci peut être mis en évidence notamment par une mesure de consistance qui peut être évaluée par le test dit de pénétration.

Dans ce test, on mesure la profondeur de la pénétration en dixième de millimètres (mm/10) à température ambiante, d'un cône creux d'une masse totale égale à 150 g appliquée pendant 5 secondes sur la surface du gel initialement le cône creux ne touche pas la surface.

Les gels plastiques enrobés selon la présente invention ont des valeurs dites "de pénétration" identiques à celles mesurées sur les mêmes gels non enrobés aux erreurs de mesure près.

Les matériaux obtenus selon la présente invention, c'est-à-dire les gels enrobés par une poudre de polymère organique n'ont pas de tack et ils présentent un toucher doux. On constate également une excellente adhérence de l'enveloppe au gel et on observe aucune exsudation dudit gel, même lorsque ledit matériau est chauffé.

Les gels tels qu'enrobés selon la présente invention peuvent être utilisés notamment dans le domaine médical (coussins anti-escarres, matelas de tables d'opération, matelas de tables de radiologie) ou bien dans le domaine automobile (coussins de voiture), ou de l'ameublement.

Les exemples qui suivent illustrent l'invention.

**DISPOSITIF UTILISE**

a) MOULE :

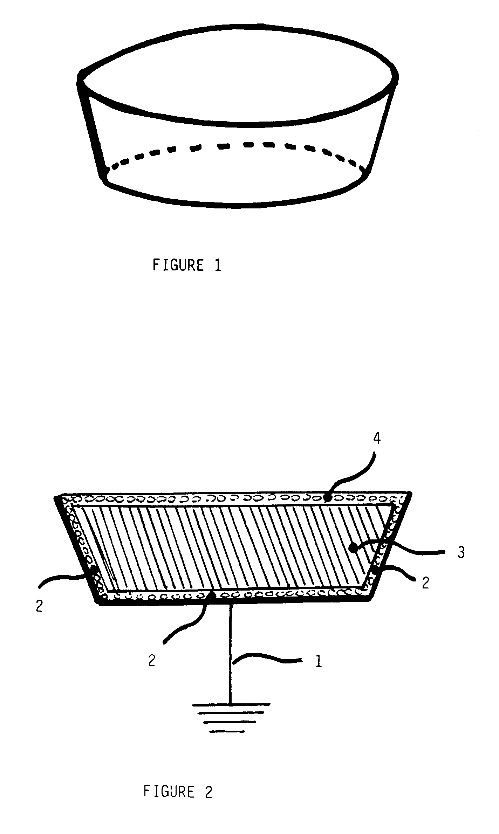

on utilise un moule ouvert ayant la forme d'un tronc de cône de révolution tel que représenté sur les figures 1 et 2.

La figure 2 représente une coupe schématique transversale du moule utilisé.

Sur cette figure 2, on représente par 1 la mise à la terre du moule.

b) Pistolet électrostatique :

Pour l'application des poudres par pulvérisation électrostatique, nous utilisons un pistolet électrostatique positif référence HP 720 77 39 477 de la société GEMA AG. Ce pistolet électrostatique est relié à un générateur de tension modèle 710/711 du même fabricant. La poudre de polymère est appliquée sous une tension de 40 kV avec un débit d'air de 2 sur une échelle de 0 à 7. Le temps de pulvérisation est de quelques secondes. La quantité de poudre déposée est 200 à 300g/m$^2$.

**POUDRES UTILISEES**

- poudre ultrafine de polyamide 12, commercialisée par la Société ELF ATOCHEM S.A. sous la dénomination ORGASOL®2002 D NAT 1, désignée ci-après par P1, présentant un diamètre moyen de particule de 20 μm et une porosité de 1 m$^2$/g déterminée par la méthode BET.
- poudre ultrafine de copolyamide 6/12 commercialisée par la Société ELF ATOCHEM S.A. sous la dénomination ORGASOL®3501 EX D NAT 1 désignée ci-après par P2, présentant un diamètre moyen de particule de 10 μm et une porosité de 10,5 m$^2$/g déterminée par la méthode BET.
- poudre ultrafine de polyamide 12, commercialisée par la société ELF ATOCHEM S.A. sous la dénomination ORGASOL®2002 ES4 NAT 3, désignée ci-après par P3, présentant un diamètre moyen de particules de 40 μm et une porosité de 0,8 m$^2$/g déterminée par la méthode BET.

## COMPOSITIONS GELIFIABLES PLASTIFIEES DE POLYURETHANE A DEUX COMPOSANTS

Les compositions ont été préparées en utilisant les constituants suivants.

- PolyBd®R45 HT : polybutadiène hydroxytéléchélique de $\overline{Mn}$ égale à 2800 (déterminée par chromatographie d'exclusion stérique), présentant un indice d'hydroxyle $I_{OH}$ exprimé en milliéquivalent par gramme (meq/g) égal à 0,83, une viscosité (mPa.s à 30°C) égale à 5000 et une densité égale à 0,90 ;

- le phtalate de dioctyle ci-après désigné par DOP,

- le dibutyldilaurate d'étain (catalyseur) ci-après désigné par DBTL,

- MU 55 : prépolymère d'isocyanate à base de polybutadiène dihydroxyle et de MDI ayant une teneur pondérale en fonction NCO égale à 5,2 %, commercialisé par la société Michel BAULE-UREFLEXsous la désignation MU55.

On prépare la partie A en mélangeant à température ambiante dans un réacteur muni d'une agitation, le polyol, le DOP et le DBTL.

Au mélange ainsi obtenu on ajoute le MU55 (partie B) sous agitation.

Au moment où l'on ajoute la partie B, le temps de travail Tt commence à être décompté, puis à un Tt convenable, inférieure au temps de prise Tp la composition gélifiable telle que précédemment préparée sera coulée dans le moule.

## ESSAIS

- le moule tel que représenté sur les figures 1 et 2 est mis à la masse.
- on effectue le revêtement des faces intérieures du moule au moyen d'un pistolet électrostatique tel que décrit ci-avant avec les poudres P1, P2 ou P3 (figure 2 - couche de poudre 2).
- on coule les compositions gélifiables telles que préparées comme précédemment décrites (figure 2 : représenté par 3) possédant un temps de prise d'environ 30 minutes.
- on effectue le poudrage de la partie supérieure avec une poudre identique à celle qui a été utilisée pour revêtir les faces intérieures du moule (figure 2 : couche de poudre 4).
- ensuite, on abandonne l'ensemble pendant 48 heures à température ambiante puis on démoule et on élimine l'éventuel excès de poudre par un jet d'air comprimé. Sur les gels enrobés, on évalue le tack au doigt : colle ou ne colle pas. On évalue également les propriétés mécaniques du gel fini enrobé par le test de pénétration.

On apprécie également l'adhérence de la couche de poudre de polyamide au gel fini par le test dit test au ruban adhésif.

Ce test consiste à évaluer l'adhérence de la poudre sur le gel. Pour cela, nous cherchons à déterminer la quantité de poudre qui peut être arrachée du gel à l'aide d'un morceau de ruban adhésif d'une superficie de 4 cm$^2$.

Nous utilisons un ruban adhésif commercialisé par la Société 3M sous la dénomination SCOTCH®, référencé Magic Tape 810.

Trois morceaux de ruban adhésif sont appliqués successivement sur la même zone du gel, et par différence de pesée nous déterminons la quantité totale de poudre arrachée sachant que la quantité maximale de poudre que peut coller 4 cm$^2$ de ruban adhésif est de 46 mg +/- 3. Il faut signaler que ce test n'est pas réalisable sur un gel non enrobé.

L'ensemble des résultats est reporté dans le tableau 1 ci-après. Dans ce tableau 1, on a indiqué :

- la nature de la poudre d'enrobage,
- les constituants et les proportions des parties A et B de la composition gélifiable,
- le rapport molaire NCO/OH,

- le temps de travail Tt (exprimé en minutes)
- la prise de poids au ruban adhésif (exprimée en mg),
- le tack au doigt.
- Pour tous les essais reportés dans le tableau 1, on constate :

  - une exsudation nulle après 3 jours à 70°C,
  - une pénétration d'environ 116 mm/10 pour tous matériaux réalisés avec la poudre P1 alors que cette pénétration est de 110 mm/10 pour les gels non enrobés correspondants.

  Pour l'essai comparatif 14P, la prise de poids au ruban adhésif ne peut être déterminée, car le ruban adhésif reste collé au gel.

TABLEAU 1

| ESSAI | POUDRE D'ENROBAGE | COMPOSITION GELIFIABLE | | | | | Tt (mn) | PRISE DE POIDS AU RUBAN ADHESIF (mg) | TACK AU DOIGT |
|---|---|---|---|---|---|---|---|---|---|
| | | Partie A | | | Partie B | | | | |
| | | PolyBd (g) | DOP (g) | DBTL (g) | MU55 (g) | $\frac{NCO}{OH}$ | | | |
| 1C | P1 | 100 | 100 | 0,20 | 50 | 0,75 | 12 | 1,2 | non |
| 2D | P1 | 100 | 100 | 0,20 | 50 | 0,75 | 13,5 | 2 | non |
| 3E | P1 | 100 | 100 | 0,20 | 50 | 0,75 | 15 | 3 | non |
| 4F | P1 | 100 | 100 | 0,20 | 50 | 0,75 | 20 | 36 | non |
| 5G | P1 | 100 | 100 | 0,20 | 43 | 0,64 | 14 | > 2 | collant |
| 6H | P1 | 100 | 100 | 0,20 | 46 | 0,69 | 14 | 2,3 | léger collant |
| 7I | P1 | 100 | 100 | 0,20 | 48 | 0,72 | 14 | 4,7 | non |
| 8J | P1 | 100 | 100 | 0,20 | 44 | 0,65 | 20 | 0,8 | non |
| 9K | P1 | 100 | 100 | 0,20 | 48 | 0,72 | 20 | - | non |
| 10L | P2 | 100 | 100 | 0,20 | 43 | 0,64 | 20 | 1,1 | non |
| 11M | P2 | 100 | 100 | 0,20 | 48 | 0,72 | 20 | 0,4 | non |
| 12N | P2 | 100 | 100 | 0,20 | 48 | 0,72 | 16 | 1 | colle |
| 13O | P3 | 100 | 100 | 0,20 | 48 | 0,72 | 20 | 1,7 | non |
| 14P | - | 100 | 100 | 0,20 | 43 | 0,65 | 20 | - | très collant |

**Revendications**

1. Procédé pour enrober un gel de matière plastique, caractérisé en ce qu'il consiste :

a) à déposer sur la totalité des faces intérieures d'un moule une couche continue d'une poudre de polymère organique ;
b) à couler une composition gélifiable éventuellement plastifiée dans ledit moule ;

9

c) à maintenir la couche de poudre de polymère organique sur les faces intérieures du moule pendant toute l'opération de coulage b) ;

d) à gélifier ladite composition coulée ;

e) à démouler, et

f) à éliminer l'excès de poudre de polymère organique.

2. Procédé selon la revendication 1, caractérisé en ce que la poudre de polymère organique est une poudre de polyamide.

3. Procédé selon l'une des revendications 1 et 2, caractérisé en ce que la poudre de polymère organique a un diamètre de particule compris entre 2 μm et 200 μm et, de préférence, compris entre 5 μm et 60 μm.

4. Procédé selon la revendication 1 caractérisé en ce que la composition gélifiable est une composition gélifiable plastifiée de polyuréthane a deux composants.

5. Procédé selon la revendication 4, caractérisé en ce que ladite composition est constituée d'une partie A comprenant au moins un polyol, au moins un plastifiant, au moins un catalyseur et d'une partie B constituée par au moins un polyisocyanate.

6. Procédé selon la revendication 5, caractérisé en ce que le rapport molaire des fonctions isocyanates sur les fonctions hydroxyles du polyol est au moins égale à 0,50 et, de préférence, compris entre 0,65 et 1.

7. Procédé selon l'une des revendications 5 et 6, caractérisé en ce que le polyol est un polybutadiène polyol.

8. Procédé selon l'une des revendications 4 et 5, caractérisé en ce que le plastifiant est le dioctylphtalate.

9. Procédé selon l'une des revendications 4 à 6, caractérisé en ce que le polyisocyanate est un prépolymère d'isocyanate obtenu par réaction d'un 4,4-diphénylméthane diisocyanate (MDI) avec un polydiène polyol.

10. Procédé selon la revendication 4, caractérisé en ce que l'on effectue le coulage de la composition gélifiable plastifiée à deux composants d'une façon telle que le temps de travail Tt défini comme étant le temps entre le moment où l'on mélange les deux composants A et B et le moment où l'on coule ladite composition est inférieure au temps de prise Tp.

11. Dispositif pour mettre en oeuvre le procédé selon l'une des revendications 1 à 10, caractérisé en ce qu'il comprend des moyens pour mettre le moule à la masse, des moyens pour électriser chaque grain de la poudre de polymère organique, des moyens pour véhiculer et déposer ladite poudre sur toutes les faces intérieures du moule, des moyens pour couler la composition gélifiable, des moyens pour démouler et des moyens pour éliminer l'excès de poudre.

12. Dispositif selon la revendication 11, caractérisé en ce que l'électrisation des grains, le véhiculage et le dépôt de la poudre est effectué par un pistolet électrostatique.

13. Matériau constitué d'un gel enrobé par une poudre de polymère organique tel qu'obtenu par le procédé selon l'une des revendications 1 à 10.

FIGURE 1

FIGURE 2

**Office européen des brevets**

## RAPPORT DE RECHERCHE EUROPEENNE

Numéro de la demande

EP 98 40 0154

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 298 743 A (TORAY SILICONE CO)<br>* exemple 5 *<br>* revendications 1,2 * | 1 | C08J3/075<br>C08J5/00<br>C08J7/04 |
| D,A | EP 0 057 838 A (BAYER AG.)<br>* revendications 1,7,8 * | 1 | |
| A | DATABASE WPI<br>Section Ch, Week 7511<br>Derwent Publications Ltd., London, GB;<br>Class A32, AN 75-18203W<br>XP002044969<br>& JP 49 075 669 A (NIPPON PAINT CO LTD) ,<br>22 juillet 1974<br>* abrégé * | 1 | |
| A | DATABASE WPI<br>Section Ch, Week 8444<br>Derwent Publications Ltd., London, GB;<br>Class A32, AN 84-273878<br>XP002044970<br>& JP 59 169 833 A (TOYO RUBBER IND CO LTD)<br>, 25 septembre 1984<br>* abrégé * | 1 | **DOMAINES TECHNIQUES RECHERCHES (Int.Cl.6)**<br>C08J<br>C08L |

Le présent rapport a été établi pour toutes les revendications

| Lieu de la recherche | Date d'achèvement de la recherche | Examinateur |
|---|---|---|
| LA HAYE | 5 mars 1998 | Niaounakis, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)